# EUROPÄISCHE PATENTSCHRIFT

(11) **EP 3 172 091 B1**
(45) Veröffentlichungstag und Bekanntmachung des Hinweises auf die Patenterteilung: **26.12.2018**
(21) Anmeldenummer: 15736786.3
(22) Anmeldetag: 07.07.2015
(51) Int. Cl.: B60R 21/36, B60R 21/38

(54) **FAHRZEUG MIT EINER FUSSGÄNGERSCHUTZVORRICHTUNG**
VEHICLE HAVING A PEDESTRIAN PROTECTION SYSTEM
VÉHICULE ÉQUIPÉ D'UN DISPOSITIF DE PROTECTION DES PIÉTONS

(30) Priorität: 24.07.2014 DE 102014010872
(43) Veröffentlichungstag der Anmeldung: 31.05.2017
(73) Patentinhaber: Daimler AG, 70327 Stuttgart (DE)
(72) Erfinder: BATTERMAN, Jens, 75328 Schömberg (DE); BURCZYK, Christian, 70569 Stuttgart (DE); GREWING, Klaus, 75382 Althengstett (DE); HEINRICH, Till, 70197 Stuttgart (DE); KRASS, Sven, 70197 Stuttgart (DE); LARSSON, Bengt, 71063 Sindelfingen (SE); MAIER, Franz, 73553 Alfdorf (DE); MERZ, Uwe, 70195 Stuttgart (DE); OEZTUERK, Abdulkadir, 71116 Gärtringen (DE); PAUREVIC, Marica, 71083 Herrenberg (DE); WOETZEL, Marco, 70794 Filderstadt (DE)
(74) Vertreter: JENSEN & SON
(86) Internationale Anmeldenummer: PCT/EP2015/001380
(87) Internationale Veröffentlichungsnummer: WO 2016/012077

(56) Entgegenhaltungen:
- EP-A1- 2 105 358
- EP-A2- 1 176 062
- WO-A1-02/079009
- DE-A1- 10 013 563
- DE-A1- 10 020 660
- DE-A1- 10 332 365
- DE-A1-102004 029 757
- DE-A1-102007 034 556
- JP-A- 2006 076 448
- JP-A- 2008 307 956
- US-B1- 6 415 883

## Beschreibung

Die Erfindung betrifft ein Fahrzeug mit einer Fußgängerschutzvorrichtung, welche eine bei einem erfassten Anprall einer Person an das Fahrzeug zumindest an einer einer Windschutzscheibe zugewandten Kante aufstellbare Motorhaube umfasst.

Im Allgemeinen sind Fußgängerschutzvorrichtungen für Fahrzeuge, die eine aktiv aufstellbare Motorhaube und/oder einen auslösbaren Airbag umfassen, bekannt. Bei einem erfassten Anprall einer Person an das Fahrzeug ist die Motorhaube zumindest in einem einer Windschutzscheibe zugewandten Bereich aufstellbar, wobei der Airbag zum Schutz der Person vor einem Aufprall die Windschutzscheibe diese im Wesentlichen abdeckt. Die JP2006076448 offenbart ein Fahrzeug mit einer Fußgängerschutzvorrichtung gemäß dem Oberbegriff des Anspruchs 1.

Der Erfindung liegt die Aufgabe zugrunde, ein gegenüber dem Stand der Technik verbessertes Fahrzeug mit einer Fußgängerschutzvorrichtung anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche.

Ein Fahrzeug weist eine Fußgängerschutzvorrichtung auf, welche eine bei einem erfassten Anprall einer Person an das Fahrzeug zumindest an einer einer Windschutzscheibe zugewandten Kante aufstellbare Motorhaube umfasst. Erfindungsgemäß ist zusätzlich zumindest ein Airbag vorgesehen, welcher sich im ausgelösten Zustand über einen Bereich einer A-Säule und einen an diese angrenzenden Bereich der Windschutzscheibe erstreckt.

Mittels des zumindest einen Airbags wird ein Schutzbereich der Fußgängerschutzvorrichtung um den Bereich der A-Säule und einer Scheibenwurzel erweitert. Ein Sichtbereich eines Fahrers des Fahrzeuges wird mittels eines solchen Airbags wenig bis gar nicht dauerhaft eingeschränkt.

Ausführungsbeispiele der Erfindung werden im Folgenden anhand von Zeichnungen näher erläutert.

Dabei zeigen:
- Fig. 1: schematisch eine perspektivische Ansicht eines Frontbereiches eines Fahrzeuges mit zwei ausgelösten Airbags,
- Fig. 2: schematisch eine Seitenansicht des Frontbereiches mit den Airbags im unausgelösten Zustand,
- Fig. 3: schematisch eine Seitenansicht des Frontbereiches mit teilweise aufgestellter Motorhaube und ausgelösten Airbags,
- Fig. 4: schematisch eine weitere Seitenansicht des Frontbereiches mit teilweise aufgestellter Motorhaube und ausgelöstem Airbag,
- Fig. 5: schematisch eine Seitenansicht des Frontbereiches mit aufgestellter Motorhaube und ausgelösten Airbags,
- Fig. 6: schematisch eine Seitenansicht des Frontbereiches bei einem Rückstellen der Motorhaube in eine Ausgangsstellung,
- Fig. 7: schematisch eine weitere Seitenansicht des Frontbereiches bei einem Rückstellen der Motohaube,
- Fig. 8: schematisch eine Seitenansicht des Frontbereiches mit zurückgestellter Motorhaube und
- Fig. 9: schematisch eines Seitenansicht des Frontbereiches mit aufgestellter Motorhaube in einer möglichen Ausführungsform.

Einander entsprechende Teile sind in allen Figuren mit den gleichen Bezugszeichen versehen.

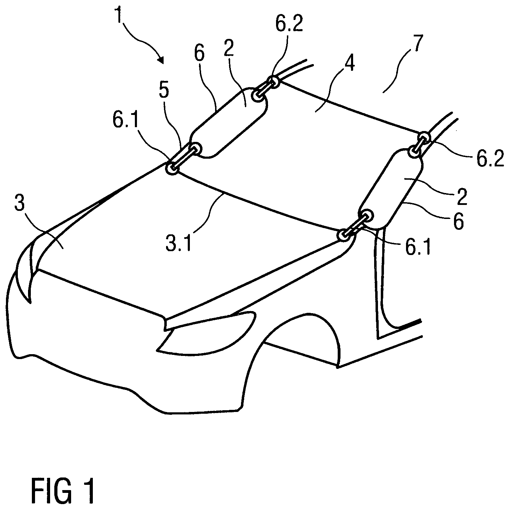

In Figur 1 ist eine perspektivische Ansicht eines Frontbereiches eines Fahrzeuges 1 mit zwei ausgelösten Airbags 2 als zusätzliche Komponenten einer Fußgängerschutzvorrichtung dargestellt.

Die Fußgängerschutzvorrichtung umfasst zudem eine Motorhaube 3, die bei einem erfassten Anprall einer Person an das Fahrzeug 1 in Richtung einer Windschutzscheibe 4 verschiebbar und an einer der Windschutzscheibe 4 zugewandten Kante 3.1 anhebbar ist.

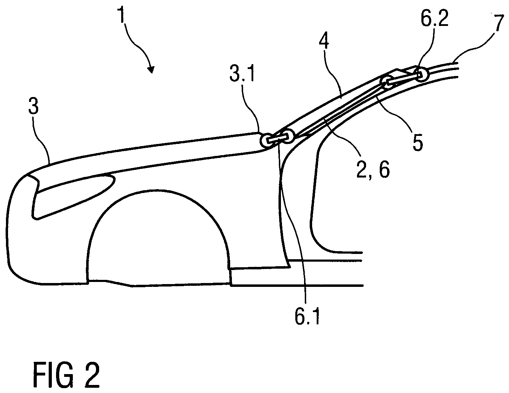

Die beiden Airbags 2 erstrecken sich über einen Bereich einer jeweiligen u. a. in Figur 2 gezeigten A-Säule 5 des Fahrzeuges 1 und weisen im Wesentlichen eine zylindrische Form auf. Beide Airbags 2 und eine zugehörige Aktorik sind in einem Gewebeschlauch 6 angeordnet. Alternativ zu der zylindrischen Form können die Airbags 2 auch unterschiedliche Formen, wie z. B. eine ovale Form, aufweisen.

Ein Ende 6.1 des jeweiligen Gewebeschlauches 6 ist an der Kante 3.1 der Motorhaube 3 und ein weiteres Ende 6.2 ist im Bereich eines vorderen Dachquerträgers eines Fahrzeugdaches 7 befestigt. Denkbar ist auch, dass das eine Ende 6.1 im Bereich eines Scharniers der Motorhaube 3 angeordnet ist. Das weitere Ende 6.2 kann alternativ oder zusätzlich im Bereich der A-Säule 5 angeordnet und befestigt sein.

Figur 2 zeigt eine Seitenansicht des Frontbereiches des Fahrzeuges 1, wobei die Airbags 2 im unausgelösten Zustand dargestellt sind.

Im unausgelösten Zustand ist der jeweilige Airbag 2 nicht sichtbar unterhalb eines die A-Säule 5 verdeckenden, nicht näher dargestellten Zierelementes angeordnet.

Bei einem Anprall einer Person an das Fahrzeug 1 sind die beiden Airbags 2 auslösbar und die Motorhaube 3 wird zum Aufstellen und abschnittsweisen Verschieben entriegelt.

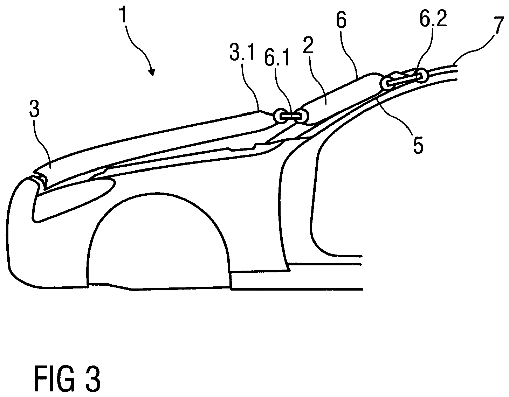

Die Figuren 3 bis 5 zeigen jeweils eine Bewegungsphase beim Aufstellen der Motorhaube 3 im Wirkzusammenhang mit den beiden Airbags 2.

Ein Anprall einer Person an das Fahrzeug 1 wurde erfasst, wobei der Anprall einen vorgegebenen Schwellwert überschreitet, so dass die Airbags 2 und die Motorhaube 3 angesteuert werden.

Die Airbags 2 werden mit einem Gas beaufschlagt, so dass sich diese entfalten und deren Volumen vergrößert, wodurch sich der Gewebeschlauch 6 des jeweiligen Airbags 2 verkürzt.

Der jeweilige Gewebeschlauch 6 ist an der Kante 3.1 der Motorhaube 3 befestigt, so dass durch das Verkürzen des Gewebeschlauches 6 eine Zugkraft zumindest zur Unterstützung eines Aufstellens der Motorhaube 3 auf diese wirkt. Wie oben beschrieben, kann der jeweilige Gewebeschlauch 6 alternativ im Bereich eines Scharniers der Motorhaube 3 befestigt sein.

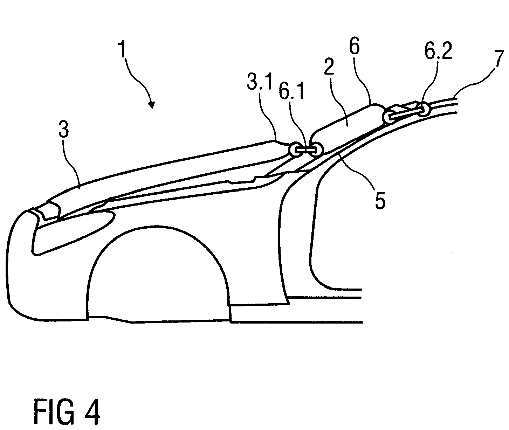

In Figur 4 hat sich der Gewebeschlauch 6 im Vergleich zu einer in Figur 3 gezeigten ersten Bewegungsphase noch weiter verkürzt, wodurch die Motorhaube 3 weiter aufstellbar ist.

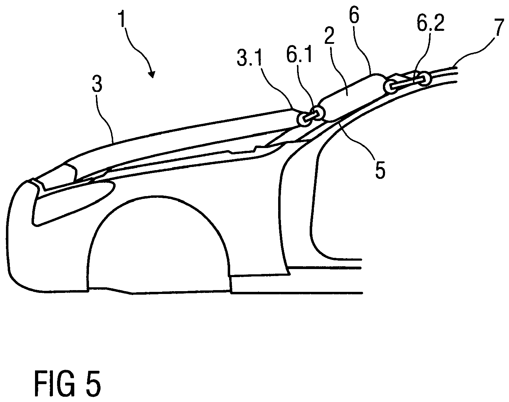

Figur 5 zeigt eine weitere Bewegungsphase der Motorhaube 3 und auch der Airbags 2, wobei die Motorhaube 3 mittels der sich durch die Volumenzunahme der Airbags 2 verkürzenden Gewebeschläuche 6 in Richtung der Windschutzscheibe 4 verschiebbar ist, so dass ein sogenannter Wischerschacht oder Windlauf des Fahrzeuges 1 als Verletzungsschutz zumindest teilweise mittels der Motorhaube 3 abgedeckt ist.

In dem vorliegenden Ausführungsbeispiel gemäß Figur 5 weisen sowohl die Airbags 2 als auch die Motorhaube 3 ihre Wirkstellung zumindest zur Verringerung einer Verletzungsgefahr für die auf das Fahrzeug 1 prallende Person auf.

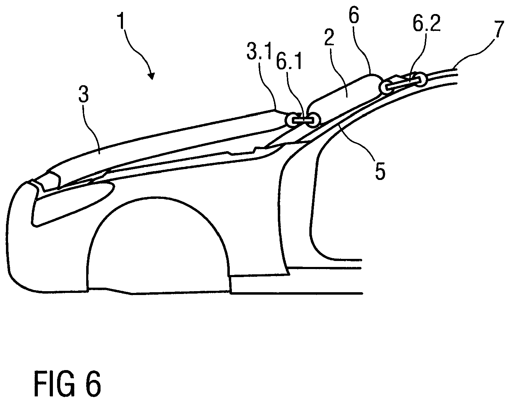

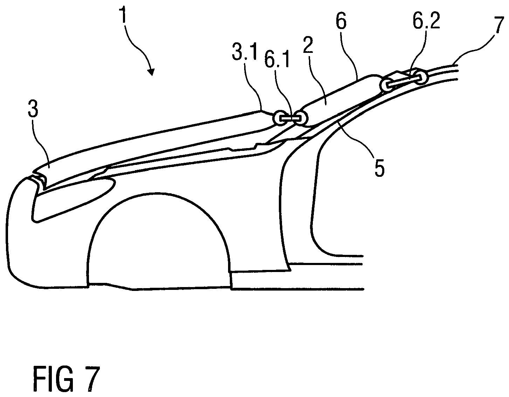

Die Figuren 6 bis 8 zeigen jeweils eine Bewegungsphase bei einem Rückstellen der Motorhaube 3 in ihre Ausgangsstellung.

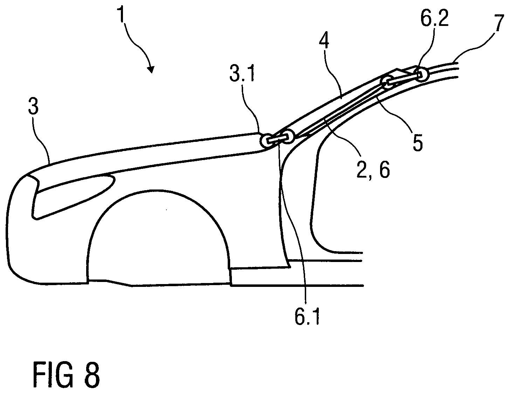

Die beiden Airbags 2 weisen eine vorgegebene Standzeit auf, so dass sich ein Druck im Inneren der Airbags 2 nach Ablauf der Standzeit kontinuierlich verringert. Dadurch verringert sich das Volumen der Airbags 2, so dass sich die Gewebeschläuche 6 verlängern und sich die Motorhaube 3 in ihre Ausgangstellung positioniert, welche in Figur 8 dargestellt ist.

Beim Erreichen der Ausgangstellung ist das Gas weitestgehend aus den Airbags 2 entwichen, so dass der jeweilige Gewebeschlauch 6 seine Ausgangslänge aufweist, so dass keine Zugkraft mehr auf die Motorhaube 3 wirkt und diese ihre Ausgangsstellung einnimmt.

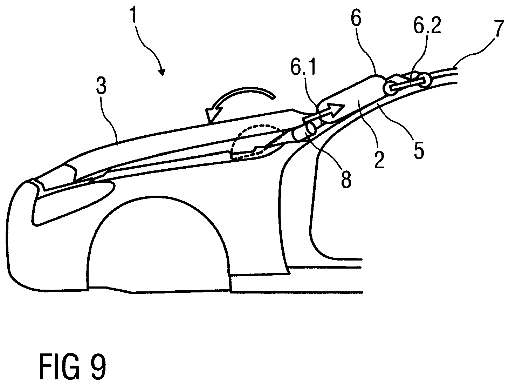

Figur 9 zeigt die Motorhaube 3 im aufgestellten Zustand, wobei zusätzlich zu den Airbags 2 ein nicht näher dargestelltes Federelement in Form einer.Drehstabfeder und ein Airbagelement als Dämpfungselement 8 vorgesehen sind.

Bei einer auf die Motorhaube 3 mittels der Airbags 2 wirkenden Zugkraft aufgrund der durch die Volumenzunahme bedingten Verkürzung der Gewebeschläuche 6 verdreht sich die Drehstabfeder, so dass diese beim Aufstellen der Motorhaube 3 vorspannbar ist.

Verringert sich das Volumen der Airbags 2, verlängern sich die Gewebeschläuche 6, so dass auf die Motorhaube 3 keine Zugkraft mehr wirkt. Die Drehstabfeder entspannt sich, und die Motorhaube 3 positioniert sich aufgrund der wirkenden Federkraft in Richtung ihrer Ausgangsstellung.

Bei einem Aufstellen der Motorhaube 3 in die Wirkstellung ist das Dämpfungselement 8, welches im Bereich der Kante 3.1 der Motorhaube 3 angeordnet ist, automatisch befüllbar. Mittels des Dämpfungselementes 8 ist eine Dämpfung der aufgestellten Motorhaube 3 bei einem Aufprall auf dieselbe einstellbar.

Beispielsweise ist das Dämpfungselement 8 Bestandteil eines der Airbags 2 zum Aufstellen der Motorhaube 3. Dabei ist der Einsatz eines Dämpfungselementes 8 mit unterschiedlicher Zug- und Druckstufe denkbar.

Alternativ oder zusätzlich kann auch ein anderes Dämpfungselement im Bereich der Kante 3.1 der Motorhaube 3 angeordnet sein.

## Patentansprüche

1. Fahrzeug (1) mit einer Fußgängerschutzvorrichtung, umfassend eine bei einem erfassten Anprall einer Person an das Fahrzeug (1) zumindest an einer einer Windschutzscheibe (4) zugewandten Kante (3.1) aufstellbare und zusätzlich in Richtung der Windschutzscheibe (4) verschiebbaren Motorhaube (3), wobei zusätzlich zumindest ein Airbag (2) vorgesehen ist, welcher sich im ausgelösten Zustand über einen Bereich einer A-Säule und einen an diese angrenzenden Bereich der Windschutzscheibe (4) erstreckt, **dadurch gekennzeichnet, dass**. bei Anprall einer Person mittels des zumindest einen Airbags (2) eine Zugkraft auf die Motorhaube (3) zum Aufstellen derselben wirkt.

2. Fahrzeug (1) nach Anspruch 1,
**dadurch gekennzeichnet, dass** der zumindest eine Airbag (2) zylinderförmig oder oval ausgebildet und in einem Gewebeschlauch (6) angeordnet ist und der Gewebeschlauch (6) mit einem Ende (6.1) an der Kante (3.1) der Motorhaube (3) oder im Bereich eines Scharniers der Motorhaube (3) und einem weiteren Ende (6.2) im Bereich eines Dachquerträgers des Fahrzeugdaches (7), einer Karosserie, der A-Säule (5) und/oder eines Dachrahmens befestigt ist.

3. Fahrzeug (1) nach Anspruch 1,
**dadurch gekennzeichnet, dass** der zumindest eine Airbag (2) in einem Gewebeschlauch (6) angeordnet und der Gewebeschlauch (6) einerseits an einer Kante (3.1) der Motorhaube (3) oder im Bereich eines Scharniers der Motorhaube (3) und andererseits im Bereich des vorderen Dachquerträgers eines Fahrzeugdaches (7) befestigt ist, so dass bei einer Entfaltung des zumindest einen Airbags (2) sich der Gewebeschlauch (6) verkürzt und eine Zugkraft auf die Motorhaube (3) wirkt.

4. Fahrzeug (1) nach Anspruch 1,
**dadurch gekennzeichnet, dass** der zumindest eine Airbag (2) in einem Gewebeschlauch (6) angeordnet ist und mittels des sich durch die Volumenzunahme des zumindest einen Airbags (2) verkürzenden Gewebeschlauches (6) die Motorhaube (3) in Richtung der Windschutzscheibe (4) verschiebbar ist.

5. Fahrzeug (1) nach Anspruch 1,
**dadurch gekennzeichnet, dass** der Airbag (2) im unausgelösten Zustand unterhalb eines die A-Säule (5) verdeckendes Zierelementes und/oder Abdeckelementes angeordnet ist.

## Claims

1. Vehicle (1) with a pedestrian protection device, comprising an engine cover (3) which, if an impact of a person on the vehicle (1) is detected, can be raised at least at an edge (3.1) facing the windscreen (4) and additionally be displaced in the direction of the windscreen (4), wherein in addition at least one airbag (2) is provided which in the triggered state extends over a region of an A-pillar and an adjoining region of the windscreen (4),
**characterised in that** at an impact of a person a tensile force acts on the engine cover (3) by way of the at least one airbag (2) for raising it.

2. Vehicle (1) according to claim 1,
**characterised in that** the at least one airbag (2) is cylindrical or oval and located in a fabric hose (6), and **in that** the fabric hose (6) is secured at one end (6.1) to the edge (3.1) of the engine cover (3) or in the region of a hinge of the engine cover (3) and at a further end (6.2) in the region of a roof crossmember of the vehicle roof (7), a body, the A-pillar (5) and/or a roof frame.

3. Vehicle (1) according to claim 1,
**characterised in that** the at least one airbag (2) is located in a fabric hose (6), and **in that** the fabric hose (6) is secured on the one hand to an edge (3.1) of the engine cover (3) or in the region of a hinge of the engine cover (3) and on the other hand in the region of the front roof crossmember of a vehicle roof (7), so that the fabric hose (6) becomes shorter as the at least one airbag (2) unfolds and applies a tensile force to the engine cover (3).

4. Vehicle (1) according to claim 1,
**characterised in that** the at least one airbag (2) is located in a fabric hose (6), and **in that** the engine cover (3) can be displaced in the direction of the windscreen (4) by means of the fabric hose (6) shortened by the increase of the volume of the at least one airbag (2).

5. Vehicle (1) according to claim 1,
**characterised in that** the airbag (2) is located below a decorative and/or covering element covering the A-pillar (5) in its non-triggered state.

## Revendications

1. Véhicule automobile (1) comprenant un dispositif de protection de piéton, comprenant, lors d'une collision détectée entre une personne et le véhicule (1), au moins un capot moteur (3) pouvant être disposé sur un bord (3.1) orienté vers un pare-brise (4) et en outre pouvant être déplacé dans la direction du pare-brise (4), il est prévu en outre un coussin de sécurité gonflable qui s'étend dans un état déployé sur une zone d'un montant A et une zone lui étant adjacente du pare-brise (4), **caractérisé en ce que** lors de la collision d'une personne au moyen dudit coussin de sécurité gonflable (2) une force de traction agit sur le capot moteur (3) pour le mettre en place.

2. Véhicule automobile (1) selon la revendication 1, **caractérisé en ce que** ledit coussin de sécurité gonflable (2) est conçu sous la forme d'un cylindre ou ovale et est disposé dans un tuyau en tissu (6) et le tube en tissu (5) est fixé par une extrémité (6.1) sur le bord (3.1) du capot moteur (3) ou dans la zone d'une charnière du capot moteur (3) et par une autre extrémité (6.2) dans la zone d'un support transversal du toit (7) du véhicule automobile, d'une carrosserie, du montant A (5) et/ou d'un cadre de toit.

3. Véhicule (1) selon la revendication 1, **caractérisé en ce que** ledit coussin de sécurité gonflable (2) est disposé dans un tube en tissu (6) et le tube en tissu (6) d'une part est fixé à un bord (3.1) du capot moteur (3) ou dans la zone d'une charnière du capot moteur (3) et d'autre part dans la zone du support transversal avant d'un toit (7) de véhicule automobile, de sorte que, en cas d'un déploiement dudit coussin de sécurité gonflable (2) le tube en tissu (6) se raccourcisse et une force de traction agisse sur le capot moteur (3).

4. Véhicule automobile (1) selon la revendication 1, **caractérisé en ce que** ledit coussin de sécurité gonflable (2) est disposé dans un tube en tissu (6) et au moyen du tube en tissu (6) se raccourcissant par l'augmentation du volume dudit coussin de sécurité gonflable (2), le capot moteur (3) peut se déplacer dans la direction du pare-brise (4).

5. Véhicule automobile (1) selon la revendication 1, **caractérisé en ce que** le coussin de sécurité gonflable (2) est disposé dans l'état non déployé en dessous d'un élément décoratif recouvrant le montant A (5) et/ou un élément de recouvrement.
